# EUROPEAN PATENT SPECIFICATION

(11) **EP 2 434 189 B1**
(45) Date of publication and mention of the grant of the patent: **28.08.2013**
(21) Application number: 11181195.6
(22) Date of filing: 14.09.2011
(51) Int. Cl.: F16L 3/24, A47B 47/02, A47B 96/02

(54) **Rapid joint coupling bracket assembly for supporting cable-carrying systems**
Schnellverschluss für Kabelhalter in Kabelträgersystemen
Groupe de support à couplage rapide pour le support des systèmes de porte-câbles

(30) Priority: 24.09.2010 IT MI20101743
(43) Date of publication of application: 28.03.2012
(73) Proprietor: DKC Europe S.R.L., 20122 Milano (IT)
(72) Inventor: Scagliola, Marco, 16031 Bogliasco (Genova) (IT)
(74) Representative: Petruzziello, Aldo

(56) References cited:
- EP-A1- 0 751 598
- EP-A1- 0 751 599
- US-A- 3 794 183
- US-A- 4 444 323
- US-A- 5 868 263

## Description

The present invention generally relates to the field of support systems for cable-carrying trays. In particular, the invention relates to a rapid joint coupling bracket assembly for supporting electrical cable-carrying channels or trays. A prior art assembly is disclosed in US 5868263A.

Assemblies are known for supporting electrical cable-carrying channels or trays, which comprise a support member or bracket and an anchor member onto which the bracket is secured, e.g. bolted or welded at a desired height.

The bracket is traditionally obtained by shearing and subsequent bending of a metal sheet and has a surface suitable to supportingly receive the cable-carrying channel or tray. The anchor member is, traditionally C or U-shaped, having a perforated base surface suitable for being firmly secured to a wall or similar carrying structure by way of wall plugs and screws.

However, the above known bracket assemblies have a large disadvantage, which typically occurs during the mounting step of the bracket to the anchor profile. In fact, regardless of the chosen securing method, being either bolting or welding, the operator must determine the correct securing position and support the bracket in that correct position for the entire assembly procedure.

The main purpose of the present invention is, therefore, to eliminate, or at least reduce, the above stated disadvantages in reference to the bracket assemblies of the known art, providing a rapid joint coupling bracket assembly for supporting electrical cable-carrying channels or trays, suitably made for practical and quick assembly.

Another purpose of the present invention is to provide a bracket assembly with increased stiffness and security.

Yet another purpose of the present invention is to provide a bracket assembly that can be produced at competitive manufacturing costs.

These and further aims that will become evident in the following, are achieved according to the invention with the characteristics listed in the annexed claim 1.

According to the present invention, a bracket assembly is thus provided for supporting electrical cable-carrying channels or trays comprising:
- a holding member comprising a base surface, suitable for being firmly secured to a carrying structure, from which a pair of faced side walls extends, and
- at least one support member comprising a rest surface for the electrical cable-carrying channels or trays, from which a pair of faced side walls extends, the holding member being suitable for being coupled to the support member thereby transversally extending with respect to it at a desired height.

The bracket assembly is characterized in that the holding member comprises at least one pair of opposite teeth formed in the faced side walls, suitable for being housed into respective openings formed at the proximal end of the support member, thereby allowing a rapid joint coupling between the support member and the holding member.

Advantageous aspects of the invention become evident in the dependent claims.

The features of the invention will become more clear from the following detailed description, referring to a purely exemplificative embodiment, and thereby non limitative, illustrated in the attached drawings, in which:
Figure 1 is a perspective view of a bracket assembly according to the invention, with the support member and the holding member in a disassembled state;
Figure 2 is a perspective view from the front of the support member for electrical cable-carrying channels or trays of the bracket assembly of Figure 1;
Figure 3 is a perspective view similar to that of Figure 1, with the support member and the holding member in an assembled state; and
Figure 3A is an enlarged scale view of the detail circled in Figure 3.

In the figures listed above, same or similar elements are identified by same numerical references.

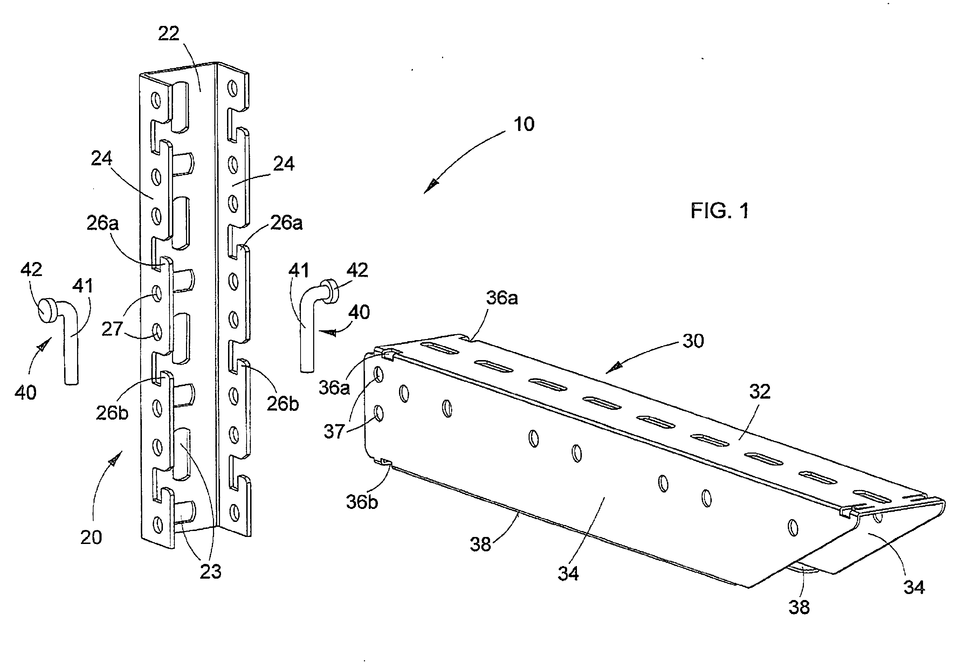

With reference to Figure 1, a bracket assembly is shown according to a preferred embodiment of the invention, generally indicated by the reference number 10.

The bracket assembly 10 comprises a holding member 20, suitable for being secured to a load carrying structure, such as a wall, and a support member 30 suitable for being coupled to the holding member 20 thereby, in use, transversally extending to it.

Preferably, the holding member 20 has a base surface 22 from which a pair of faced side walls 24 extends.

In use, the base surface 22 is placed against a wall or similar carrying structure and secured to it by way of suitable fastening means such as wall plugs passing through appropriate openings 23, preferably slotted, formed into the same base wall 22.

In the side walls 24 there is at least one pair of opposite teeth 26a, formed integral with the side walls 24 by shearing of an area in correspondence to their edge and suitable for being housed into respective openings 36a in the support member 30.

Preferably, in the side walls 24 there is a further pair of opposite teeth 26b, arranged below the pair of teeth 26a, also formed integral with the side walls 24 by shearing of an area in correspondence to their edge and suitable for being housed into respective openings 36b in the support member 30, below the openings 36a.

Preferably, in the pair of faced side walls 24 are formed respective holes 27 for the passage of a respective drop safety pin 40, comprising a L- configured rod 41 and a head 42.

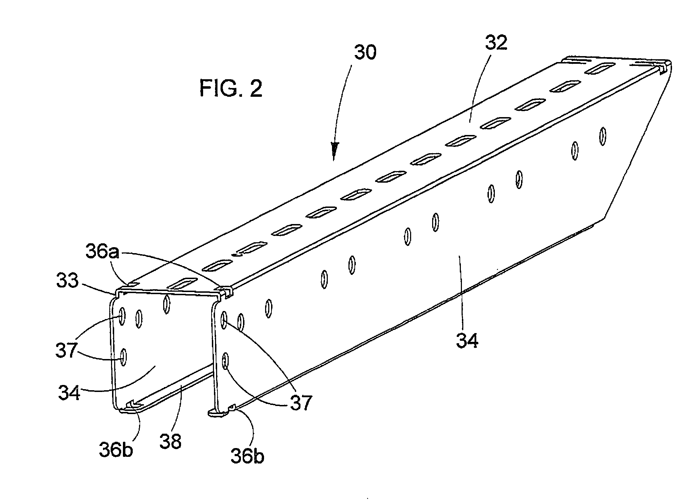

As shown in greater detail in Figure 2, the support member comprises a rest surface 32 for electrical cable-carrying channels or trays, from which a pair of faced side walls extends 34.

In correspondence to the proximal end of the support member 30, i.e. that suitable, in use, for being coupled to the holding member 20, the rest surface 32 has a shoulder 33, while the side surfaces 34 have respective holes 37, which, in use, are aligned to respective holes 27 formed in the side walls 24 of the holding member 20.

Moreover, at its proximal end, preferably in the connection area between the surface 32 and each side wall 34, the support member 30 has openings 36a for housing the respective additional tooth 26a of the pair of upper teeth of the holding member 20.

Preferably, the side walls 34 have a respective edge 38, extending towards the inside of the support member 30. At the connection area between each edge 38 and the respective side wall 34 are preferably obtained additional openings 36b for housing the respective additional tooth 26b of the pair of lower teeth of the holding member 20.

For assembling the bracket assembly 10, the user enters the teeth 26a into respective openings 36a and, eventually, the additional teeth 26b into the respective additional openings 36b.

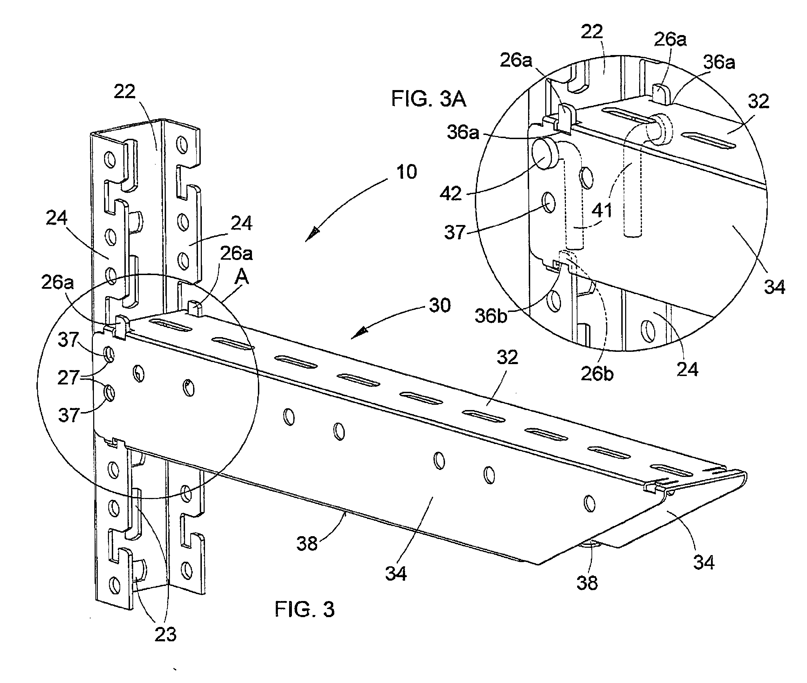

In this assembled state, shown in detail in Figures 3 and 3A, a portion of the side walls 24 of the holding member 20 is embraced by the proximal end of the support member 30, with the shoulder 33 of the support member 30 in abutment against the sheared area of the edge of each side wall 24.

The particular configuration of the holding member 20 and of the support member 30 advantageously facilitates the assembling of the bracket assembly 10, thanks to the rapid joint coupling of the teeth 26a, 26b into the respective openings 36a, 36b.

In addition, the presence of additional lower teeth 26b and of respective openings 36b, allows to obtain a double-joint between the support member 30 and the holding member 20, which advantageously prevents the upward rotation of the support member 30, increasing the rigidity and the security of the bracket assembly 10.

With reference to Figure 3A, in the assembled state, the holes 27 formed in the side walls 24 of the holding member 20 result aligned with the respective holes 37 provided in the side walls 34 of the support member 30. Within said holes 27, 37 it is then possible to insert the stem 41 of the respective drop safety pin 40, whose head 42 abuts against the outer surface of the respective side wall 34.

The pins 40 advantageously constitute a constraint for the coupling between the holding member 20 and the support member 30 further increasing the rigidity and load resistance of the bracket assembly 10.

To the embodiments of the invention described above many changes and variations of details may be introduced within the competency of a technician in the field, falling within the scope of the invention expressed by the attached claims. For example, although only one support member is described and illustrated in the example for electrical cable-carrying channels or trays, further support members can be coupled by rapid joint coupling at different heights to the holding member.

## Claims

1. A bracket assembly (10) for supporting electrical cable-carrying channels or trays comprising:
- a holding member (20) including a base surface (22) suitable for being firmly secured to a carrying structure, from which a pair of faced side walls (24) extends; and
- at least one support member (30) comprising a rest surface (32) for the electrical cable-carrying channels or trays, from which a pair of faced side walls (34) extends, said support member (30) being suitable for being coupled with said holding member (20) thereby transversally extending with respect to it at a desired height;
**characterized in that** said holding member (20) comprises at least one pair of opposite teeth (26a) formed in said faced side walls (24), suitable for being housed into respective openings (36a) formed at a proximal end of said support member (30), thereby allowing a rapid joint coupling between the support member (30) and the holding member (20).

2. A bracket assembly (10) according to claim 1, **characterized in that** said openings (36a) for housing said at least one pair of opposite teeth (26a) are formed at the connection area between said rest surface (32) and said pair of faced side walls (34).

3. A bracket assembly (10) according to claim 1 or 2, **characterized in that** said holding member (20) has a further pair of teeth (26b) placed below the pair of teeth (26a) and suitable for being housed into respective further openings (36b) formed in the at least one support member (30), below the openings (36a), thereby allowing a double joint between the support member (30) and the holding member (20).

4. A bracket assembly (10) according to claim 3, **characterized in that** said side walls (34) of the support member (30) have a respective edge (38) inwardly extending with respect to the support member (30).

5. A bracket assembly (10) according to claim 4, **characterized in that** said further openings (36b) are formed at the connection area between each side wall (34) and the respective edge (38).

6. A bracket assembly (10) according to any one of the preceding claims, **characterized in that** respective holes (27, 37) are formed in said side walls (24) of the holding member (20) and in said side walls (34) of the support member (30), said holes (27, 37) being, in use, aligned thereby allowing a drop safety pin (40) to pass therethrough.

## Patentansprüche

1. Halterbaugruppe (10) zum Stützen von Stromkabelträgerkanälen oder - ablagen, umfassend:
- ein Halteglied (20), das eine Basisfläche (22) enthält, die dazu geeignet ist, fest an einer Trägerstruktur befestigt zu sein, von der sich ein Paar einander zugekehrter Seitenwände (24) erstreckt; und
- zumindest ein Stützglied (30), das eine Ruhefläche (32) für die Stromkabelträgerkanäle oder -ablagen umfasst, von der sich ein Paar einander zugekehrter Seitenwände (34) erstreckt, wobei das Stützglied (30) dazu geeignet ist, mit dem Halteglied (20) verkuppelt zu sein, wodurch es sich bezüglich dessen quer verlaufend auf einer gewünschten Höhe erstreckt;
**dadurch gekennzeichnet, dass** das Halteglied (20) zumindest ein Paar gegenüberliegender Zähne (26a) umfasst, welche in den einander zugekehrten Seitenwänden (24) ausgebildet sind und dazu geeignet sind, in jeweiligen Öffnungen (36a), welche an einem proximalen Ende des Stützglieds (30) ausgebildet sind, eingefasst zu sein, wodurch ein Schnellverschluss zwischen dem Stützglied (30) und dem Halteglied (20) ermöglicht ist.

2. Halterbaugruppe (10) nach Anspruch 1, **dadurch gekennzeichnet, dass** die Öffnungen (36a) zum Einfassen des zumindest einen Paars gegenüberliegender Zähne (26a) im Verbindungsbereich zwischen der Ruhefläche (32) und dem Paar einander zugekehrter Seitenwände (34) ausgebildet sind.

3. Halterbaugruppe (10) nach einem der Ansprüche 1 oder 2, **dadurch gekennzeichnet, dass** das Halteglied (20) ein weiteres Paar Zähne (26b) aufweist, das unter dem Paar Zähne (26a) angeordnet ist und dazu geeignet ist, in jeweiligen weiteren Öffnungen (36b) eingefasst zu sein, die in dem zumindest einen Stützglied (30) unter den Öffnungen (36a) ausgebildet sind, wodurch ein Doppelverschluss zwischen dem Stützglied (30) und dem Halteglied (20) ermöglicht ist.

4. Halterbaugruppe (10) nach Anspruch 3, **dadurch gekennzeichnet, dass** die Seitenwände (34) des Stützglieds (30) eine jeweilige Kante (38) aufweisen, die sich bezüglich des Stützglieds (30) einwärts erstreckt.

5. Halterbaugruppe (10) nach Anspruch 4, **dadurch gekennzeichnet, dass** die weiteren Öffnungen (36b) im Verbindungsbereich zwischen jeder Seitenwand (34) und der jeweiligen Kante (38) ausgebildet sind.

6. Halterbaugruppe (10) nach einem der vorhergehenden Ansprüche, **dadurch gekennzeichnet, dass** die jeweiligen Löcher (27, 37) in den Seitenwänden (24) des Halteglieds (20) und den Seitenwänden (34) des Stützglieds (30) ausgebildet sind, wobei die Löcher (27, 37) im Gebrauch aneinander ausgerichtet sind, wodurch ermöglicht ist, dass ein Fallsicherheitsstift (40) dort hindurchläuft.

## Revendications

1. Groupe de support (10) pour le support de canaux ou plateaux porte-câbles comprenant :
- un organe de rétention (20) comprenant une surface de base (22) appropriée pour être fermement fixée à une structure portante de laquelle une paire de parois latérales se faisant face (24) s'étendent ; et
- au moins un organe de support (30) comprenant une surface de repos (32) pour les canaux ou plateaux porte-câbles électriques, de laquelle une paire de parois latérales se faisant face (34) s'étend, ledit organe de support (30) étant approprié pour être couplé avec ledit organe de rétention (20) en s'étendant transversalement de ce fait par rapport à celui-ci à une hauteur souhaitée ;
**caractérisé en ce que** ledit organe de rétention (20) comprend au moins une paire de dents opposées (26a) formées dans lesdites parois latérales se faisant face (24), appropriées pour être logées dans des ouvertures respectives (36a) formées à une extrémité proximale dudit organe de support (30), en permettant de ce fait un couplage rapide entre l'organe de support (30) et l'organe de rétention (20).

2. Groupe de support (10) selon la revendication 1, **caractérisé en ce que** lesdites ouvertures (36a) pour loger ladite au moins une paire de dents opposées (26a) sont formées à la zone de liaison entre ladite surface de repos (32) et ladite paire de parois latérales se faisant face (34).

3. Groupe de support (10) selon la revendication 1 ou 2, **caractérisé en ce que** ledit organe de rétention (20) comporte une autre paire de dents (26b) placées au-dessous de la paire de dents (26a) et appropriées pour être logées dans d'autres ouvertures respectives (36b) formées dans l'au moins un organe de support (30), au-dessous des ouvertures (36a), en permettant de ce fait une double jonction entre l'organe de support (30) et l'organe de rétention (20).

4. Groupe de support (10) selon la revendication 3, **caractérisé en ce que** lesdites parois latérales (34) de l'organe de support (30) ont un bord respectif (38) s'étendant vers l'intérieur par rapport à l'organe de support (30).

5. Groupe de support (10) selon la revendication 4, **caractérisé en ce que** lesdites autres ouvertures (36b) sont formées à la zone de liaison entre chaque paroi latérale (34) et le bord respectif (38).

6. Groupe de support (10) selon l'une quelconque des revendications précédentes, **caractérisé en ce que** des trous respectifs (27, 37) sont formés dans lesdites parois latérales (24) de l'organe de rétention (20) et dans lesdites parois latérales (34) de l'organe de support (30), lesdits trous (27, 37) étant, en utilisation, alignés en permettant de ce fait à une goupille de sécurité antichute (40) de les traverser.
